# EUROPÄISCHE PATENTANMELDUNG

(11) **EP 1 031 782 A2**
(43) Veröffentlichungstag der Anmeldung: **30.08.2000**
(21) Anmeldenummer: 00103660.7
(22) Anmeldetag: 22.02.2000
(51) Int. Cl.: F16L 59/02, F16L 55/033

(54) **Rohrschale**

(30) Priorität: 26.02.1999 DE 19908673
(71) Anmelder: Deutsche Rockwool Mineralwoll-GmbH, 45966 Gladbeck (DE)
(72) Erfinder: Nowack, Peter, Dipl.-Phys., 45879 Gelsenkirchen (DE)
(74) Vertreter: Wanischeck-Bergmann, Axel, Dipl.-Ing.

(57) **Zusammenfassung**

Die Erfindung betrifft eine Rohrschale (1) zur Wärme- und / oder Schalldämmung einer Rohrleitung, insbesondere einer Rohrleitung für die Abführung von bei der Verbrennung von fossilen Brennstoffen in Heizungsanlagen entstehenden Abgasen, mit zumindest einem Dämmelement (2), das zwei im wesentlichen parallel zueinander verlaufende große Oberflächen (3, 4) aufweist, von denen zumindest eine Oberfläche (3, 4) an einer Mantelfläche eines benachbarten Bauelementes, insbesondere an der Außenmantelfläche der zu dämmenden Rohrleitung und / oder an einer Innenmantelfläche eines das Rohrelement umgebenden Mantelsteins anliegt. Um eine derartige Rohrschale (1) zu schaffen, die in vielfältiger Weise bei unterschiedlichen Rohrleitungen, insbesondere Kaminsystemen einsetzbar ist und Fertigungstoleranzen ausgleicht, wobei ein fester Sitz der Rohrschale (1), insbesondere zwischen zwei benachbarten Bauteilen sichergestellt ist, wird vorgeschlagen, daß im Bereich zumindest einer Oberfläche (3, 4) Vorsprünge (8, 9) angeordnet sind.

## Beschreibung

Die Erfindung betrifft eine Rohrschale zur Wärme- und / oder Schalldämmung einer Rohrleitung, insbesondere einer Rohrleitung für die Abführung von bei der Verbrennung von fossilen Brennstoffen in Heizungsanlagen entstehenden Abgasen, mit zumindest einem Dämmelement, das zwei im wesentlichen parallel zueinander verlaufende große Oberflächen aufweist, von denen zumindest eine Oberfläche an einer Mantelfläche eines benachbarten Bauelementes, insbesondere an der Außenmantelfläche der zu dämmenden Rohrleitung und / oder an einer Innenmantelfläche eines das Rohrelement umgebenden Mantelsteins anliegt.

Die Erfindung betrifft ferner eine Verwendung einer Rohrschale mit zumindest einem Dämmelement, das zwei im wesentlichen parallel zueinander verlaufende große Oberflächen aufweist.

Aus dem Stand der Technik sind derartige Rohrschalen bekannt. Sie bestehen aus einer oder mehreren Dämmplatten, die eine bestimmte Biegefähigkeit aufweisen, so daß sie an den Krümmungsradius einer Rohrleitung angepaßt werden können. Derartige Rohrschalen sind aber auch bei Rohrleitungen mit einem von einem kreisförmigen Querschnitt abweichenden Querschnitt, beispielsweise einem polygonalem Querschnitt verwendbar.

Die voranstehend beschriebenen Rohrschalen dienen insbesondere der Wärmedämmung von dreischaligen Schornsteinen, die aus einem Rauchrohr, einer Dämmschicht und Mantelsteinen bestehen. Hierbei ist das Rauchrohr, welches aus übereinander angeordneten Rohrschüssen besteht, innerhalb der Mantelsteine angeordnet. Zwischen den Mantelsteinen und den Rohrschüssen des Rauchrohres, welches im übrigen auch einstückig ausgebildet sein kann, sind Dämmelemente angeordnet, die beispielsweise aus Mineralwolle, insbesondere Steinwolle bestehen und die Rohrschale bilden.

Das Rauchrohr besteht insbesondere aus grob keramischen Materialien, wie beispielsweise Schamotte und kann im Querschnitt rund oder im wesentlichen polygonal ausgebildet sein, wobei die Kanten eines im Querschnitt polygonal ausgebildeten Rauchrohres aus strömungstechnischen und aus werkstofftechnischen Gründen abgerundet sind. Die Montage dieser Schornsteine erfolgt in der Weise, daß zunächst Mantelsteine unter Verwendung von Mörtel aufeinandergesetzt werden. Die Zahl der aus Gewichtsgründen kürzeren Mantelsteine ist abhängig von der Länge der Rauchrohrsegmente, d. h. der Rohrschüsse, welche unter Zwischenlage der Dämmelemente in den Mantelsteinen angeordnet werden. Die die Rohrschale bildenden Dämmelemente stützen das Rauchrohr gegen den Mantelstein ab und müssen genau eingepaßt werden, so daß eine vollständige Wärmedämmung erzielt wird, die nicht durch Unstetigkeitsstellen im Bereich der Dämmelemente, d. h. zwischen benachbarten Dämmelementen beeinträchtigt wird. Derartige Dämmelemente haben in der Regel eine Materialstärke von 3 bis 5 cm, so daß es sich hier um verhältnismäßig dünne Platten handelt. Durch den hohen Reibungskoeffizient des Dämmstoffes auf der Mantelsteinoberfläche bzw. der Oberfläche des Rauchrohres kann es zu Beschädigungen der Dämmelemente kommen. Es ist auch möglich, daß der hohe Reibungskoeffizient eine Stauchung der eingeschobenen Dämmelemente verursacht, so daß benachbarte Dämmelemente nicht mit ihren Kanten vollständig aufeinanderliegen. Darüberhinaus besteht die Gefahr, daß die dünnen Dämmstoffplatten knicken, so daß zwischen Mantelstein und Rauchrohr Bereiche entstehen, die nicht ausreichend wärmegedämmt sind, da offene Fugen an den Stoßstellen der Platten den Wärmedurchlaßwiderstand der Dämmschicht deutlich reduzieren.

Aus der DE 196 16 268 U1 ist ein in der Praxis sich bewährendes Dämmelement zur Wärmedämmung von im Querschnitt polygonal ausgebildeten Rohrleitungen bekannt. Darüberhinaus beschreibt auch die AT-PS 319 453 die Ausbildung einer Rohrschale, die in einem Zwischenraum zwischen benachbarten Bauelementen, beispielsweise einem Rauchrohr und einem Mantelstein angeordnet werden kann. Weitere Bespiele von diesbezüglichen Rohrschalen sind aus der US 3 336 951, der DE 82 32 124 U1 sowie der DE-OS 25 08 733 bekannt.

Dem voranstehend genannten Stand der Technik ist gemein, daß die in diesen Druckschriften beschriebenen Rohrschalen im Bereich ihrer großen Oberflächen Ausnehmungen oder Einschnitte aufweisen, die die Montage derartiger Rohrschalen bei Schornsteinen vereinfacht.

Ausgehend von diesem Stand der Technik liegt der Erfindung die **Aufgabe** zugrunde, eine gattungsgemäße Rohrschale zu schaffen, die in vielfältiger Weise bei unterschiedlichen Rohrleitungen, insbesondere Kaminsystemen einsetzbar ist und Fertigungstoleranzen ausgleicht, wobei ein fester Sitz der Rohrschale, insbesondere zwischen zwei benachbarten Bauteilen sichergestellt ist.

Zur **Lösung** dieser Aufgabenstellung ist vorgesehen, daß im Bereich zumindest einer Oberfläche Vorsprünge angeordnet sind.

Demzufolge weist das Dämmelement zur Bildung der Rohrschale im Bereich zumindest einer Oberfläche Vorsprünge auf die sich geringfügig aus der Oberfläche hervorheben. Diese Vorsprünge unterstützen die Klemmwirkung der Rohrschale, insbesondere zwischen den Mantelsteinen und dem Rauchrohr. Gleichzeitig wird die bei Einschieben zwischen Rauchrohr und Mantelstein auftretende Reibungskraft im Bereich der die Vorsprünge aufweisenden Oberfläche des Dämmelementes reduziert.

Schließlich gleichen die Vorsprünge Fertigungstoleranzen sowohl des Dämmelementes, als auch der zu dämmenden Rohrleitung bzw. des damit verbundenen Systemkomponenten aus. Die Vorsprünge sind kompressibel ausgebildet, so daß beim Einbau der Rohrschale eine Druckspannung zwischen dem Dämmelement und dem benachbarten Bauelement aufgebaut wird, sie sicherstellt, daß die Rohrschale während des Einbaus des Bauelementes nicht aus diesem herausgleitet.

Nach einem weiteren Merkmal der Erfindung ist vorgesehen, daß die Vorsprünge in gleichmäßigen Abständen zueinander auf der Oberfläche des Dämmelementes angeordnet sind. Hierdurch wird eine Anordnung des Dämmelementes in einem konstanten Abstand zum benachbarten Bauelement gewährleistet, so daß die voranstehend beschriebenen Vorteile insgesamt über die gesamte Fläche des Dämmelementes bzw. der Rohrschale erhalten bleiben. Der Abstand zwischen dem Dämmelement und dem Bauelement kann im übrigen sehr gering ausgebildet sein, um unnötige Lufträume, die die Dämmleistung herabsetzen, zu vermeiden.

Die Vorsprünge sind leistenförmig ausgebildet und erstrecken sich insbesondere parallel zu einer Längskante des Dämmelementes. Es ist aber auch vorstellbar, daß die Vorsprünge warzenförmig ausgebildet sind und über die Fläche des Dämmelementes bzw. der Rohrschale verteilt angeordnet sind.

Nach einem weiteren Merkmal der Erfindung ist vorgesehen, daß das Dämmelement an parallel zueinander verlaufenden Seitenflächen korrespondierend ausgebildete Abstufungen aufweist. Diese Abstufungen sind derart ausgebildet, daß das Dämmelement im Bereich seiner Seitenflächen ineinandersteckbar ist, um eine durchgehende Rohrschale mit gleichbleibenden Dämmeigenschaften zu erzielen. Vorzugsweise sind die Vorsprünge im Bereich der Abstufungen angeordnet, was sich insbesondere dann als vorteilhaft erwiesen hat, wenn die Rohrschale aus mehreren derartig ausgebildeten Dämmelementen besteht. In der Regel sind derartige Dämmelemente gleich ausgebildet, so daß auch dann die Vorsprünge in gleichmäßigen Abständen zueinander über den Umfang der Rohrschale verteilt angeordnet sind.

Nach einem weiteren Merkmal der Erfindung ist vorgesehen, daß die Vorsprünge auf beiden Oberflächen des Dämmelementes angeordnet sind. Hierbei hat es sich als vorteilhaft erwiesen, daß insgesamt die positiven Wirkungen der Rohrschale weiter verbessert werden.

Die Vorsprünge sind im Querschnitt halbkreisförmig ausgebildet, so daß sie einerseits linien- oder punktförmig an den Mantelflächen des oder der benachbarten Bauteile anliegen und andererseits durch die Formgebung eine gute Kompressibilität aufweisen.

Alternativ kann vorgesehen sein, daß die Vorsprünge im Querschnitt dreieckförmig ausgebildet sind. Diese Ausgestaltung ist insbesondere dann vorteilhaft, wenn die Vorsprünge im Bereich der Abstufungen des oder der Dämmelemente angeordnet sind.

Wie bereits erwähnt, kann die Rohrschale aus mehreren Dämmelementen bestehen, die plattenförmig ausgebildet sind und eine bestimmte Biegesteifigkeit aufweisen, die eine Anpassung der Dämmelemente an den erforderlichen Radius der Rohrschale ermöglicht. Die Dämmelemente bilden somit Abschnitte der Rohrschale und sind zur Rohrschale zusammensetzbar.

Es ist ferner vorgesehen, daß das Dämmelement bzw. die Dämmelemente aus Mineralfasern, insbesondere Glas-, Schlacken- und / oder Steinwolle, aus Keramikfasern, aus Schaumkunststoffen, wie EPS, FEF, PEF, PF, PUR, PIR und / oder UF und / oder aus Schaumglas, Calziumsilikat, Kork, Holzfasern, Holzwolle, Zellulose und / oder Blähperlite und / oder dergleichen besteht bzw. bestehen.

Die erfindungsgemäße Rohrschale kann bei runden, ovalen, in sonstiger Weise kreisbogenabschnittförmigen und / oder polygonalen, insbesondere rechteckigen oder quadratischen Rohrleitungen verwendet werden.

Schließlich ist erfindungsgemäß eine Verwendung dieser Rohrschale zur Wärme- und / oder Schalldämmung einer Rohrleitung für die Abführung von bei der Verbrennung von fossilen Brennstoffen in Heizungsanlagen entstehenden Abgasen vorgesehen, wobei die Rohrschale zwischen einem Rauchrohr und einem Mantelstein angeordnet wird.

Weitere Merkmale und Vorteile der erfindungsgemäßen Rohrschale ergeben sich aus der nachfolgenden Beschreibung der zugehörigen Zeichnung, in der bevorzugte Ausführungsformen der erfindungsgemäßen Rohrschale dargestellt sind. In der Zeichnung zeigen:
- Figur 1: eine erste Ausführungsform einer Rohrschale im Querschnitt und
- Figur 2: eine zweite Ausführungsform einer Rohrschale im Querschnitt.

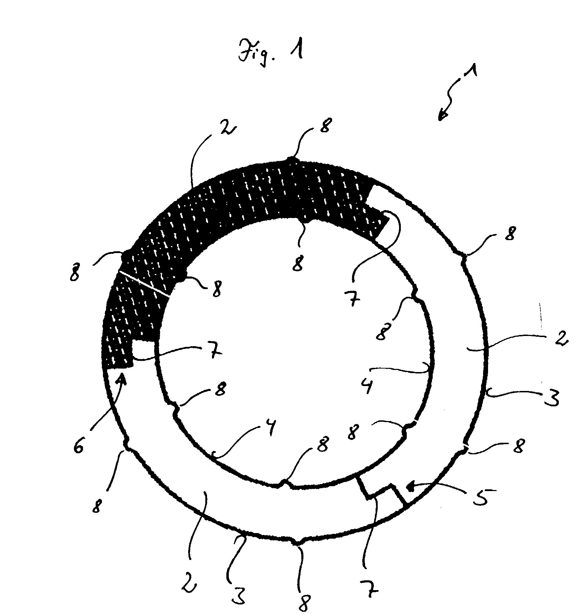

In Figur 1 ist eine erste Ausführungsform einer Rohrschale 1 im Querschnitt dargestellt. Die Rohrschale 1 besteht aus drei plattenförmigen Dämmelementen 2, die eine bestimmte Biegesteifigkeit aufweisen, so daß sie an den Durchmesser einer zu dämmenden, nicht näher dargestellten Rohrleitung anpaßbar sind. Die drei Dämmelemente 2 bilden insgesamt die im Querschnitt ringförmige Rohrschale 1, so daß die Rohrschale 1 zur Wärme- und / oder Schalldämmung eines Schornsteines verwendbar ist, der ein nicht näher dargestelltes Rauchrohr und Mantelsteine aufweist, die im Abstand derart vom Rauchrohr angeordnet sind, daß die Rohrschale 1 einen ringförmigen Hohlraum zwischen den Mantelsteinen und dem Rauchrohr ausfüllt.

Jedes Dämmelement 2 weist zwei parallel zueinander verlaufende große Oberflächen 3, 4 sowie zwei in Längsrichtung verlaufende Schmalseiten 5, 6 auf Die große Oberfläche 4 bildet hierbei eine innere Mantelfläche und die große Oberfläche 3 eine äußere Mantelfläche der Rohrschale 1, wobei die große Oberfläche 3 an der Innenmantelfläche des Mantelsteins und die große Oberfläche 4 an der Außenmantelfläche des Rauchrohres anliegt.

Die Schmalseiten 5, 6 sind derart mit einer Abstufung 7 versehen, daß benachbarte Dämmelemente 2 formschlüssig miteinander verbindbar sind und insgesamt eine Rohrschale 1 mit homogener Materialdicke entsteht. Hierzu ist die Abstufung 7 im Bereich der Schmalseite 5 annähernd treppen- bzw. Z-förmig ausgebildet, so daß eine Stufe entsteht, in die ein Abschnitt des benachbarten Dämmelementes 2 einsetzbar ist.

Die Dämmelemente 2 bestehen aus Mineralfasern, nämlich Steinwollefasern, die in üblicher Weise zu einem flächigen Dämmelement ausgelegt und mit Bindemitteln gebunden sind.

Im Bereich ihrer großen Oberflächen 3, 4 weisen die Dämmelemente 2 in gleichmäßigen Abständen zueinander angeordnete Vorsprünge auf, die im Querschnitt halbkreisförmig ausgebildet sind. Die Vorsprünge 8 sind leistenförmig ausgebildet und erstrecken sich in Längsrichtung der Rohrschale 1 über annähernd die gesamte Oberfläche 3, 4 des Dämmelementes 2. Ferner ist zu erkennen, daß die Vorsprünge 8 bei der Ausführungsform gemäß Figur 1 im wesentlichen gegenüberliegend im Bereich der Oberflächen 3, 4 angeordnet sind.

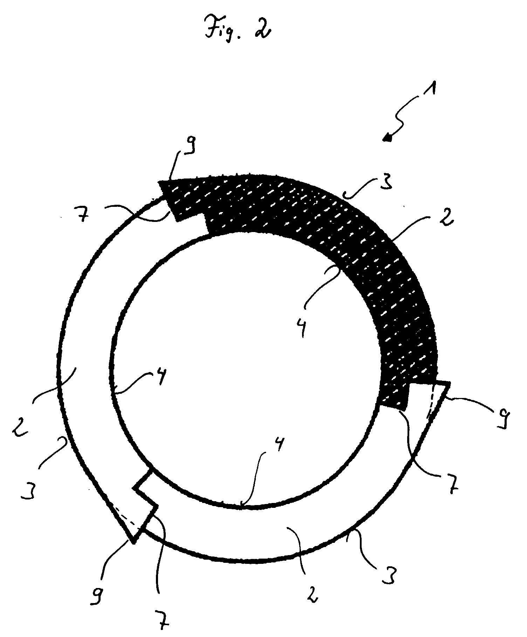

In Figur 2 ist eine zweite Ausführungsform einer Rohrschale 1 dargestellt, die konstruktiv im wesentlichen mit der Rohrschale 1 gemäß Figur 1 übereinstimmt. Der Unterschied zwischen den beiden Rohrschalen 1 in den Figuren 1 und 2 besteht darin, daß bei dem Ausführungsbeispiel gemäß Figur 2 Vorsprünge 9 im Bereich der Abstufungen 7 angeordnet sind. Die Vorsprünge 9 sind im Querschnitt dreieckförmig ausgebildet und erstrecken sich ebenfalls leistenförmig in Längsrichtung der Rohrschale 1. Wie bei den Vorsprüngen 8 gemäß Figur 1 entsteht hierdurch eine linienförmige Anlage der Vorsprünge 9 an dem nicht näher dargestellten Mantelstein eines Kamins. Darüberhinaus ist sowohl die halbkreisförmige als auch dreieckförmige Formgebung der Vorsprünge 8, 9 vorteilhaft hinsichtlich der Kompressibilität der Vorsprünge 8, 9, die aus gleichem Material wie das Dämmelement 2 bestehen.

Die voranstehend beschriebenen Rohrschalen 1 eignen sich insbesondere für die Verwendung zur Wärme- und / oder Schalldämmung einer Rohrleitung für die Abführung von bei der Verbrennung von fossilen Brennstoffen in Heizungsanlagen entstehenden Abgasen, wobei die Rohrschale 1 zwischen einem Rauchrohr und einem Mantelstein angeordnet wird. Die dargestellte Rohrschale 1 ist hierbei für ein im Querschnitt rundes Rauchrohr und einen Mantelstein mit im Querschnitt runder Rohröffnung vorgesehen. Es besteht aber die Möglichkeit, die voranstehend beschriebene Rohrschale 1 derart abzuwandeln, daß sie auch bei Schornsteinsystemen mit polygonalen Rauchrohren bzw. Mantelsteininnenflächen einsetzbar sind. Bei der Verwendung der Rohrschale 1 im voranstehend beschriebenen Fall unterstützen die Vorsprünge 8, 9 eine Klemmwirkung zwischen der Rohrschale 1 und den Komponenten des Schornsteinsystems. Die Vorsprünge 8, 9 reduzieren gleichzeitig die Reibungskräfte, die auftreten, wenn die Rohrschale 1 in einen Hohlraum zwischen Mantelstein und Rauchrohr eingeschoben wird. Diese Montage kann entweder werksseitig oder baustellenseitig erfolgen, wobei die Vorsprünge 8, 9 bei werksseitiger Montage den Vorteil aufweisen, daß die Rohrschale 1 durch die Vorsprünge 8, 9 verbessert in dem Hohlraum zwischen dem Rauchrohr und dem Mantelstein gehalten ist. Die Vorsprünge 8, 9 sind kompressibel, so daß sie eine bestimmte Druckspannung aufbauen, mit der die voranstehend beschriebenen Vorteile erzielbar sind.

Neben den voranstehend genannten Materialien für die Rohrschale 1 kann diese selbstverständlich auch aus anderen Materialien bestehen, wenn die Rohrschale 1 beispielsweise bei Niedertemperaturanwendungen aus geschäumten Formteilen hergestellt werden kann. Neben Steinwollefasern können insbesondere Glaswollefasern, Keramikfasern, Schlackenwollefasern und / oder Polystyrolformteile Verwendung finden. Selbstverständlich besteht auch die Möglichkeit, die Rohrschale 1 aus Kork, Holzfasern, Holzwolle, Zellulose oder dergleichen auszubilden, wobei die Verwendung der erfindungsgemäßen Rohrschale 1 nicht auf den dargestellten Bereich bei Schornsteinsystemen beschränkt ist.

## Patentansprüche

1. Rohrschale zur Wärme- und / oder Schalldämmung einer Rohrleitung, insbesondere einer Rohrleitung für die Abführung von bei der Verbrennung von fossilen Brennstoffen in Heizungsanlagen entstehenden Abgasen, mit zumindest einem Dämmelement (2), das zwei im wesentlichen parallel zueinander verlaufende große Oberflächen (3, 4) aufweist, von denen zumindest eine Oberfläche an einer Mantelfläche eines benachbarten Bauelementes, insbesondere an der Außenmantelfläche der zu dämmenden Rohrleitung und / oder an einer Innenmantelfläche eines das Rohrelement umgebenden Mantelsteins anliegt,
**dadurch gekennzeichnet,**
daß im Bereich zumindest einer Oberfläche (3, 4) Vorsprünge (8, 9) angeordnet sind.

2. Rohrschale nach Anspruch 1,
**dadurch gekennzeichnet,**
daß die Vorsprünge (8, 9) in gleichmäßigen Abständen zueinander auf der Oberfläche (3, 4) angeordnet sind.

3. Rohrschale nach Anspruch 1,
**dadurch gekennzeichnet,**
daß die Vorsprünge (8, 9) leistenförmig ausgebildet sind und sich insbesondere parallel zu einer Längskante des Dämmelementes (2) erstrecken.

4. Rohrschale nach Anspruch 1,
**dadurch gekennzeichnet,**
daß das Dämmelement (2) an parallel zueinander verlaufenden Seitenflächen (5, 6) korrespondierend ausgebildete Abstufungen (7) aufweist.

5. Rohrschale nach Anspruch 4,
**dadurch gekennzeichnet,**
daß die Vorsprünge (9) im Bereich der Abstufungen (7) angeordnet sind.

6. Rohrschale nach Anspruch 1,
**dadurch gekennzeichnet,**
daß die Vorsprünge (8, 9) auf beiden Oberflächen (3, 4) des Dämmelementes (2) angeordnet sind.

7. Rohrschale nach Anspruch 1,
**dadurch gekennzeichnet,**
daß die Vorsprünge (8) im Querschnitt halbkreisförmig ausgebildet sind.

8. Rohrschale nach Anspruch 5,
**dadurch gekennzeichnet,**
daß die Vorsprünge (9) im Querschnitt dreieckförmig ausgebildet sind.

9. Rohrschale nach Anspruch 1,
**dadurch gekennzeichnet,**
daß die Rohrschale (1) aus mehreren plattenförmigen Dämmelementen (2) besteht, die abschnittförmig zusammengefügt sind.

10. Rohrschale nach Anspruch 1,
**dadurch gekennzeichnet,**
daß das Dämmelement (2) aus Mineralfasern, insbesondere Glas-, Schlacken- und / oder Steinwolle, aus Keramikfasern, aus Schaumkunststoffen, wie EPS, FEF, PEF, PF, PUR, PIR und / oder UF und / oder aus Schaumglas, Calziumsilikat, Kork, Holzfasern, Holzwolle, Zellulose und / oder Blähperlite besteht.

11. Verwendung einer Rohrschale (1) mit zumindest einem Dämmelement (2), das zwei im wesentlichen parallel zueinander verlaufende große Oberflächen (3, 4) mit zumindest auf einer großen Oberfläche (3, 4) angeordneten Vorsprüngen (8, 9) aufweist zur Wärme- und / oder Schalldämmung einer Rohrleitung für die Abführung von bei der Verbrennung von fossilen Brennstoffen in Heizungsanlagen entstehenden Abgasen, wobei die Rohrschale (1) zwischen einem Rauchrohr und einem Mantelstein angeordnet wird.
